# EUROPEAN PATENT APPLICATION

(11) **EP 4 383 366 A1**
(43) Date of publication of application: **12.06.2024**
(21) Application number: 21952926.0
(22) Date of filing: 14.08.2021
(51) Int. Cl.: H01M 4/134, H01M 4/62, H01M 10/42, H01M 10/052, H01M 10/054

(54) **POLYMER FILM FOR PROTECTING METAL ELECTRODE, AND SECONDARY BATTERY USING SAME**

(30) Priority: 04.08.2021 KR 20210102777
(71) Applicant: Kim, Jae Kwang, Cheongju-si, Chungcheonbuk-do 28317 (KR)
(72) Inventor: Kim, Jae Kwang, Cheongju-si, Chungcheonbuk-do 28317 (KR)
(74) Representative: Vossius & Partner Patentanwälte Rechtsanwälte mbB
(86) International application number: PCT/KR2021/010844
(87) International publication number: WO 2023/013804

(57) **Abstract**

When a lithium metal negative electrode having a capacity of 3,860 mAh/g is used instead of a graphite negative electrode having a capacity of 372 mAh/g to improve the energy density of a lithium secondary battery, the energy density can be improved approximately 10 times. However, the lithium metal negative electrode has a disadvantage in that dendrite is formed according to repeated cycles, the battery is short circuited, and as a result, the secondary battery explodes. The dendrite significantly reduces the capacity and lifespan of the secondary battery. The present invention effectively inhibits the growth of dendrites and improves the capacity and lifespan of the secondary battery by coating lithium metal with a polymer with a functional group having an oxygen atom in the molecular structure to which free radical is attached. The above polymer has a high rate of charge transfer during the electrochemical reaction and transfers lithium ions to lithium metal by ion exchange.

## Description

### [Technical field]

The present invention relates to polymer films for protecting metal electrodes that improve electrochemical properties by using polymers having a functional group comprising an oxygen atom containing free radicals as protective films on the surface of lithium metal negative electrodes, and secondary batteries using the same.

### [Background Art]

Conventional technologies for suppressing lithium dendrites include coating the lithium negative electrode with carbon-based materials, mixing additives into the electrolyte to form a SEI (Solid Electrolyte Interphase) layer on the negative electrode surface, or using a solid electrolyte for secondary batteries. However, these technologies have the disadvantage that a complex process is required. In secondary batteries using an SEI layer or a polymer electrolyte, if the electrochemical reaction is repeated, a gap is formed in the electrode, and the gap gradually increases, causing the electrode to collapse. So, the conventional technologies did not effectively suppress lithium dendrites.

### [Disclosure]

### [Technical Problem]

Many studies are being conducted to increase the energy density of lithium secondary batteries. Instead of the widely used secondary batteries using graphite as the negative electrode (372 mAh/g), the secondary batteries using lithium metal as the negative electrode can increase the energy density nearly tenfold (3,860 mAh/g). However, in the lithium negative electrode, dendrites, which gradually grow as lithium accumulates in one direction as the cycle progresses, may cause a short circuit of the secondary batteries and an explosion of the secondary batteries. As a result, the dendrites lower the capacity of the secondary batteries and deteriorate the lifespan characteristics.

### [Technical Solution]

The present invention increases the capacity and improves the stability and the life characteristics of secondary batteries using a metal as negative electrode by coating polymers having a functional group comprising an oxygen atom containing free radicals on the surface of the lithium metal negative electrode to inhibit the growth of such dendrites.

The polymers having a functional group comprising an oxygen atom containing free radicals may be polymers that undergoes an electrochemical oxidation-reduction reaction by interaction with Li+ ions at a voltage of 2.5 V or less. The polymers having a functional group comprising an oxygen atom containing free radicals may be polymers having a TEMPO group of Formula 1 below, a quinone group, or an anhydride group. Polymers having a functional group comprising an oxygen atom containing free radicals may be polymers having a nitroxide radical, polymers having a sulfonyloxy radical, or polymers having a phenoxyl radical.

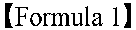

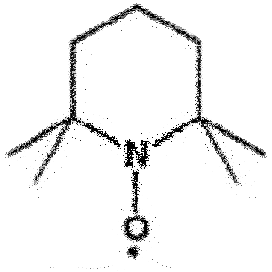

Examples of the polymers having a quinone group include polymers having 1,2-benzoquinone, 1,4-benzoquinone, 1,4-naphthoquinone, and 9,10-anthraquinone.

Examples of the polymer having an anhydride group include polymer having pyromellitic dianhydride, 1,4,5,8-naphthalenetetracarboxylic dianhydride, or tetracarboxylic dianhydride, polyimide, and the like.

Examples of the polymer having a functional group comprising an oxygen atom containing free radicals include polymers having a nitroxide radical, polymers having a sulfonyloxy radical, and polymers having a phenoxyl radical.

Examples of the polymers having a nitroxide radical include a material comprising a TEMPO group of Formula 1, a material comprising a proxyl group of Formula 2, and a material comprising 1, 1,3,3-tetramethyl-isoindolin-2-yloxyl group of Formula 3, a material comprising N-tert-butyl-N-oxylamino phenyl of Formula 4.

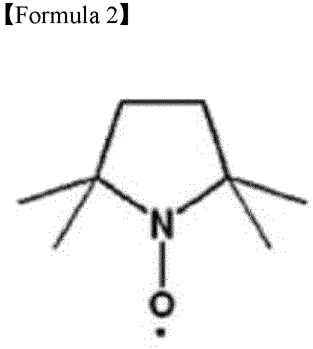

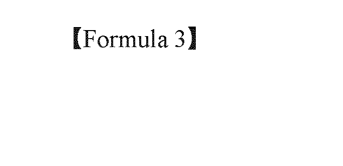

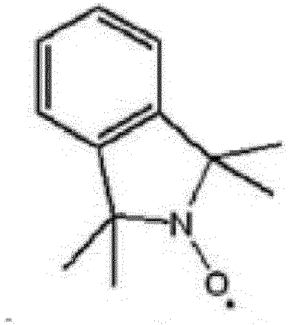

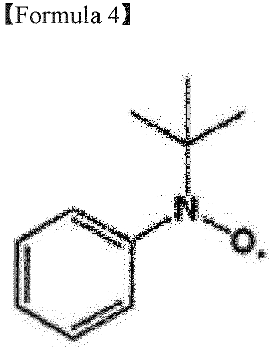

Specific examples of polymers having a nitroxide radical include PTMA (poly(2,2,6,6-tetramethylpiperidinyloxy-4-ylmethacrylate) of formula 5, PTVE (poly(2,2,6,6-tetramethylpiperidine-4-yl-1-oxyl vinyl ether) of formula 6, PTNB (poly[2,3-bis(2,2,6,6-tetramethylpiperidine-N-oxycarbonyl)-norbomene) of formula 7, and the like. 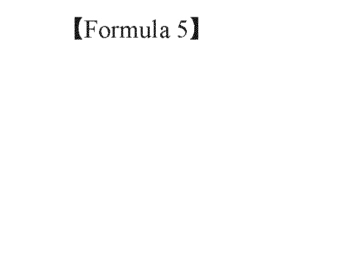 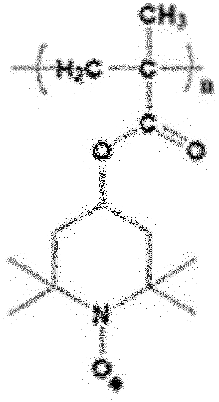 (n is 5 to 1,000) 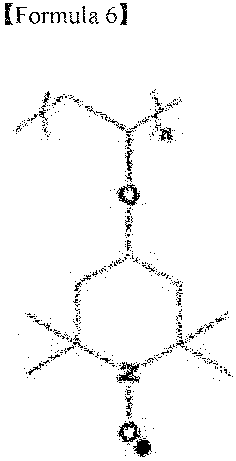 (n is 5 to 1,000) 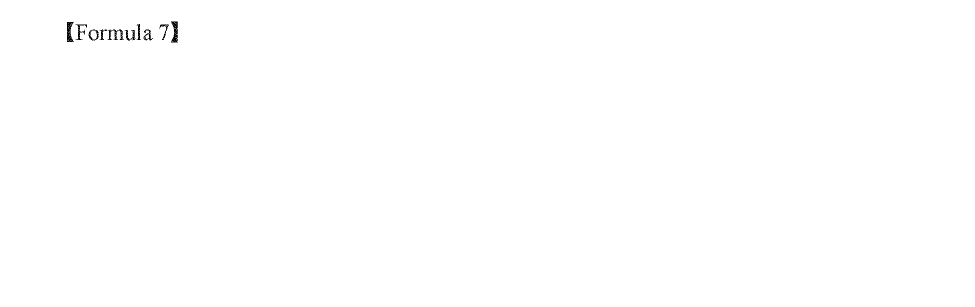 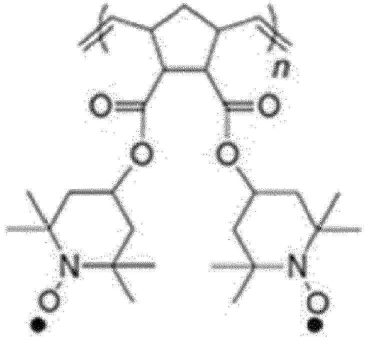 (n is 5 to 1,000)

Specific examples of the polymers having a sulfonyloxy radical include PSS (poly(4-styrenesulfonate) of Formula 8. 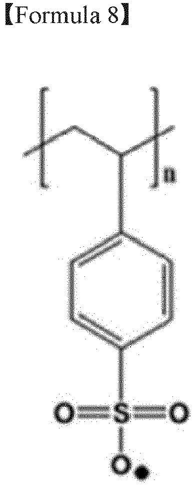 (n is 5 to 1,000)

Examples of the polymer having a phenoxyl radical include a material comprising a phenoxyl group of Formula 9, a material comprising a tetramethylphenoxyl group of Formula 10, 2,4,6-tri-t-butylphenoxyl (TBP), and the like. Polymers having a phenoxyl radical may have 5 to 1,000 repeating units.

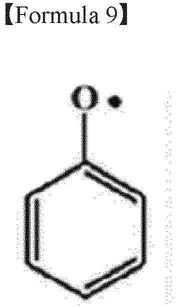

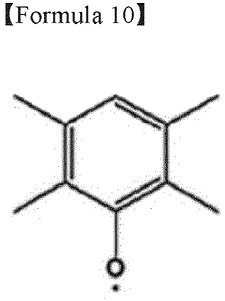

The polymers having the nitroxide radical, the polymers having the sulfonyloxy radical, or the polymers having the phenoxyl radical may be used for the negative electrode.

When the polymers having the nitroxide radical is used for the negative electrode, the nitroxide radical gains electrons during charging by the reaction shown in Formula 11 below to become an aminoxyl anion, and the aminoxyl anion loses electrons to form a nitroxide radical during discharging.

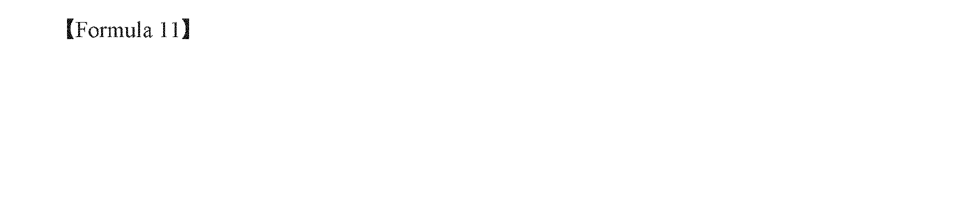

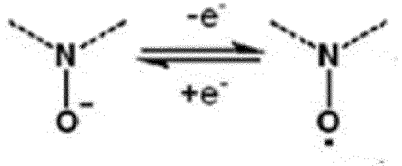

When the polymers having the sulfonyloxy radical is used for the negative electrode, the sulfonyloxy radical gains electrons during charging by the reaction shown in Formula 12 below to become a sulfonyloxy anion, and the sulfonyloxy anion loses electrons to form a sulfonyloxy radical during discharging.

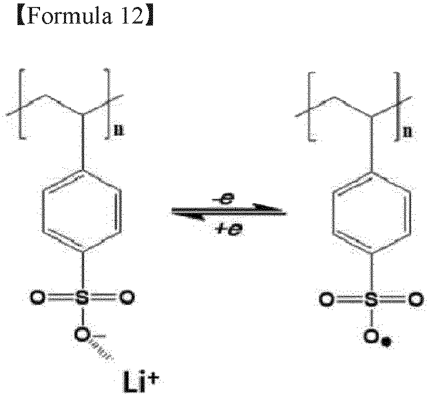

When the polymers having the phenoxyl radical is used for the negative electrode, the phenoxyl radical gains electrons during charging by the reaction shown in Formula 13 below to become a phenoxyl anion, and the phenoxyl anion loses electrons to form a phenoxyl radical during discharging.

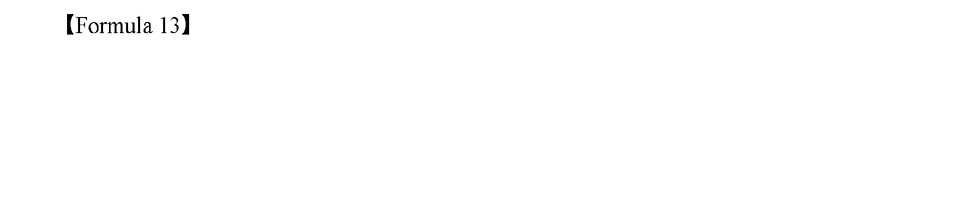

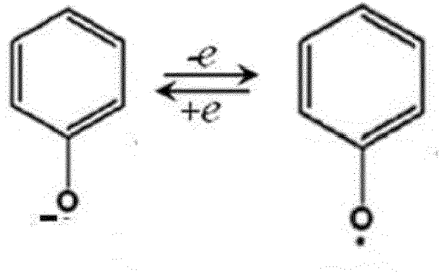

The metal electrode coated with the polymers of the present invention may be lithium, sodium, aluminum, zinc, or magnesium.

In order to coat the polymers of the present invention on a metal negative electrode, the polymers of the present invention may be dissolved in a solvent. The solvent may be a non-aqueous organic solvent or a non-aqueous organic solvent lithium salt is dissolved therein, but is not limited thereto. All kinds of solvents used as liquid electrolytes commonly used in the art may be used. The non-aqueous organic solvent may be a carbonate-based solvent, ester-based solvent, ether-based solvent, ketone-based solvent, alcohol-based solvent, aprotic solvent, or a combination thereof. The lithium salt may be LiClO₄, LiBF₄, LiPF₆, CF₃SO₂NLiSO₂CF₃(LiTFSI), Li[N(SO₂F)₂] (LiFSI), Li[B(C₂O₄)₂] (LiBOB), LiAsF₆, lithium fluorosulfonyl-trifluoromethanesulfonylimide, LiFTFSI) or a combination thereof.

The carbonate-based solvent may be ethylene carbonate, dimethyl carbonate, or the like.

The ester-based solvent may be isopropyl ester, butyl ester, isobutyl ester, or the like.

The ether-based solvent may be tetraethylene glycol dimethyl ether or the like.

The ketone-based solvent may be ethyl isopropyl ketone or the like.

The alcohol-based solvent may be methyl alcohol, ethyl alcohol, propanol, butanol, tetrabutyl alcohol, pentanol, or the like.

The aprotic solvent may be dimethyl acetamide, tetrahydrofuran, or the like.

The protective film for the metal negative electrode of the present invention can be made of the polymers having a functional group comprising an oxygen atom containing free radicals of the present invention, but it can also be made by mixing a carbon-based material or ion conductive ceramics thereto. Examples of the carbon-based material include a graphite-based material, a hard carbon-based material, a soft carbon-based material, acetylene black, and carbon nanotubes. Any kind of carbon material having electrical conductivity may be used as the carbon-based material. The graphite-based material includes natural graphite, artificial graphite, and the like. Examples of the hard carbon-based material include artificial hard carbon and natural hard carbon, and the like. Examples of the soft carbon-based material include artificial soft carbon, natural soft carbon, and the like. As the ion conductive ceramics, oxide-based ion conductive ceramics, phosphate-based ion conductive ceramics, sulfide-based ion conductive ceramics, and the like may be used. The oxide-based ion conductive ceramics include Al₂O₃-based ion conductive ceramics, SiOz-based ion conductive ceramics, BaTiO₃-based ion conductive ceramics, TiC₂-based ion conductive ceramics, β-Al₂O₃, (La,Li)TiO₃ ((La,Li)=La or Li) (LLTO), Li₅La₃Ta₂O₁₂, Li₆La₂CaTa₂O₁₂, Li₄SiO₄ Li₃BO_{2.5}N_{0.5}, Li₉SiAlO₈, Li₆La₂ANb₂O₁₂ (A=Ca or Sr), Li₂Nd₃TeSbO₁₂, Li_{1.3}Al_{0.3}Ti_{1.7}(PO₄)₃ (LTAP), Li₇La₃Zr₂O₁₂ (LLZO), Li₅La₃Ta₂O₁₂, or Li₉SiAlO₈. The phosphate-based ion conductive ceramics includes LAGP(Li₁₊ₓAlₓGe₂₋ₓ(PO₄)₃)(0<x<2, preferably 0<x<1), LTAP(Li₁₊ₓTi₂₋ₓAₗₓ(PO₄)₃)(0<x<2, preferably 0<x<1), Li₁₊ₓTi₂₋ₓAlₓSi_{y}(PO₄)_{3-y}(0<x<2, 0<y<3, preferably 0<x<1, 0<y<1), LiAlₓZr₂₋ₓ(PO₄)₃ (0<x<2, preferably 0<x<1), LiTiₓZr₂₋ₓ(PO₄)₃ (0<x<2, preferably 0<x<1), and the like. The sulfide-based ion conductive ceramics include Li₁₀GeP₂S₁₂, Li₇P₂S₁₁, Li_{3.25}Ge_{0.25}P_{0.75}S₄ (LGPS), Li₂SSi₂S₅, Li₂S-Ga₂S₃-GeS₂, Li₂S-Sb₂S₃-GeS₂, Li₂S-P₂S₅, Li₂S-P₂S₅-Li₄SiO₄, Li_{3.75}-Ge_{0.25}-P_{0.75}S4 (Thio-LISICON), and the like.

The polymers used as the polymer film interacts with lithium ions rapidly to transfer ions from lithium metal to electrolyte or from the electrolyte to the lithium metal, and inhibit dendrites growing on the lithium metal surface without collapsing the film during the electrochemical reaction.

### [Advantageous Effects]

The present invention can greatly contribute to market expansion of secondary batteries by improving energy density, stability, and lifespan characteristics of conventional secondary batteries.

### [Brief Description of Drawings]

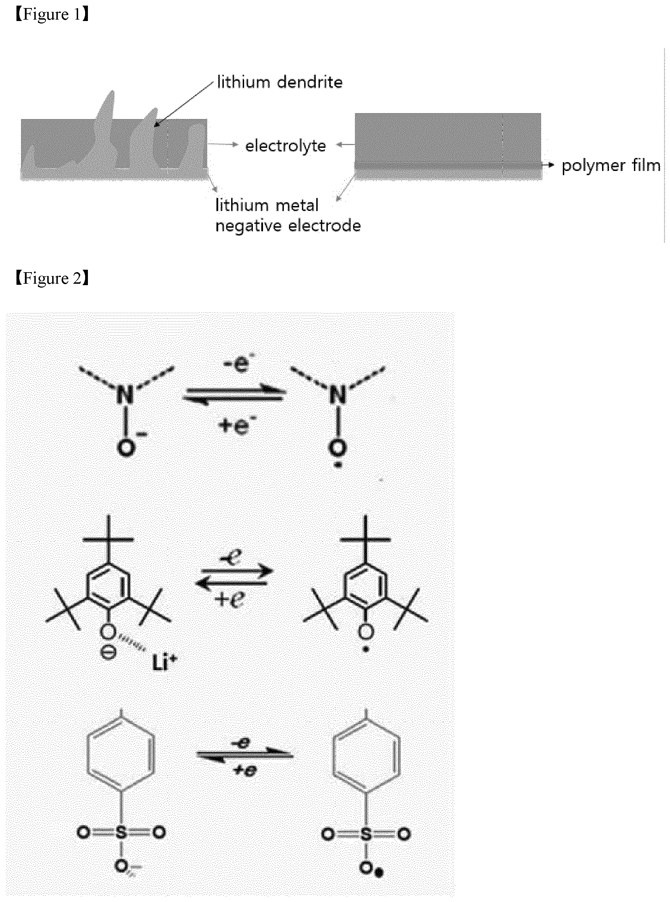

Figure 1 is a schematic diagram of secondary batteries using a lithium metal negative electrode according to the present invention.
Figure 2 shows the structure and mechanism of a representative molecule used in the polymer film of the present invention.

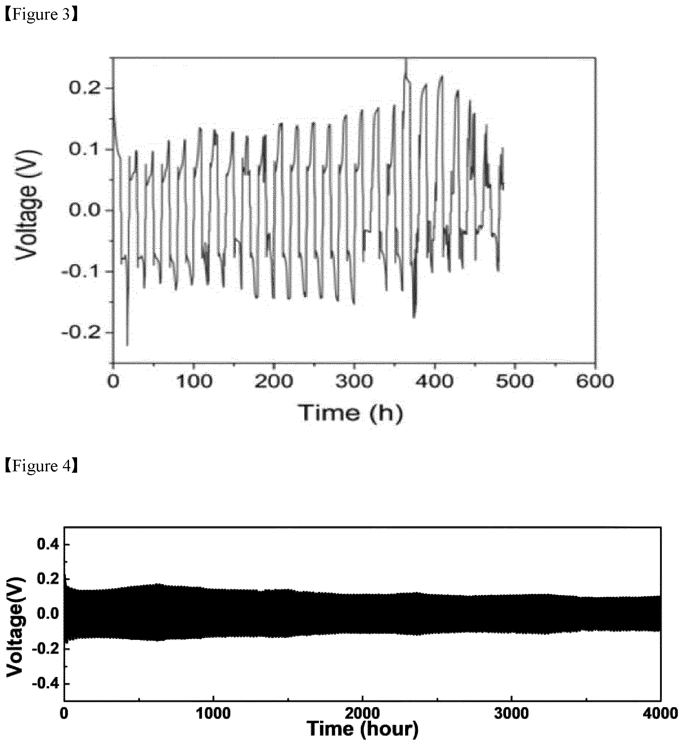

Figure 3 is a stripping-plating test result of a symmetric cell using a secondary battery using a conventional lithium metal negative electrode.
Figure 4 is a stripping-plating test result of a symmetric cell using a lithium metal negative electrode coated with the PTNB polymer film of the present invention.

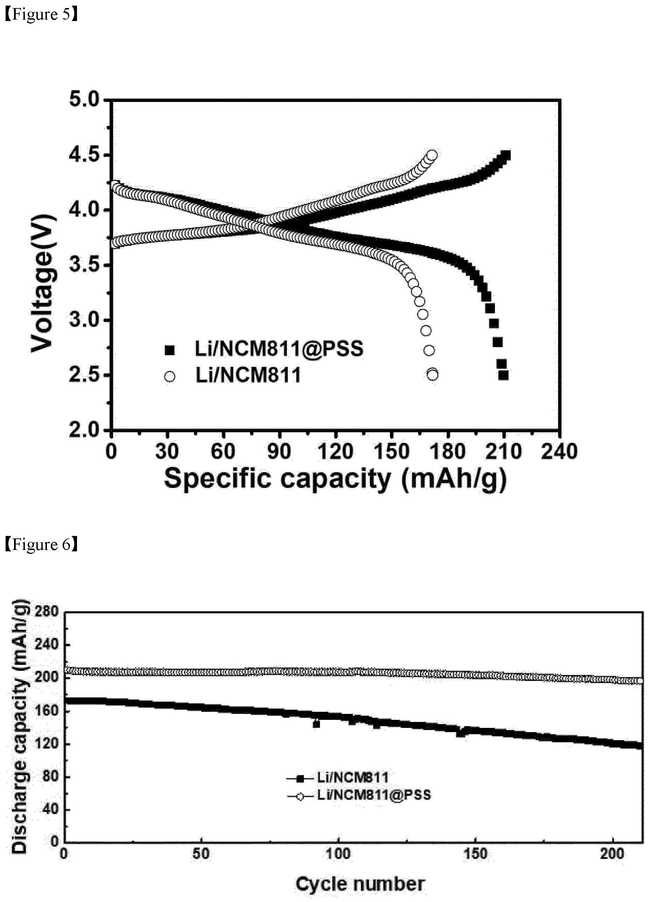

Figure 5 is a charge-discharge curve measured at a current density of 0.1C for a secondary battery composed of a lithium metal negative electrode not coated with a PSS film and a LiNi_{0.8}Co_{0.1}Mn_{0.1}O₂ (NCM811) positive electrode, and a secondary battery composed of a lithium metal negative electrode coated with a PSS film and a LiNi_{0.8}Co_{0.1}Mn_{0.1}O₂ (NCM811) positive electrode.
Figure 6 is a lifespan graph curve for a secondary battery composed of a lithium metal negative electrode not coated with a PSS film and a LiNi_{0.8}Co_{0.1}Mn_{0.1}O₂ (NCM811) positive electrode, and a secondary battery composed of a lithium metal negative electrode coated with a PSS film and a LiNi_{0.8}Co_{0.1}Mn_{0.1}O₂ (NCM811) positive electrode.

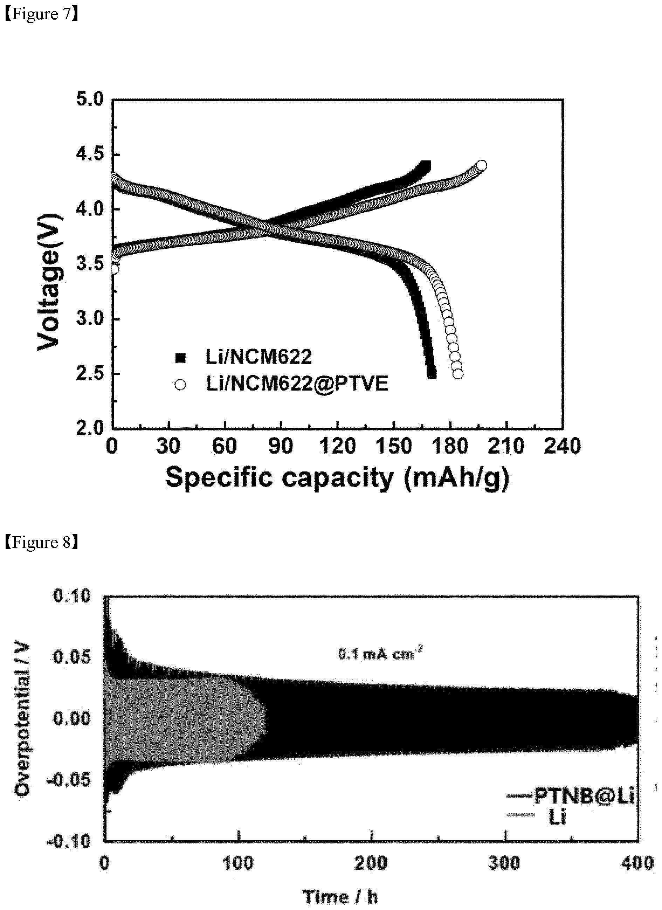

Figure 7 is a charge-discharge curve measured at a current density of 0.1C for a secondary battery composed of a lithium metal negative electrode not coated with a PTVE film and a LiNi_{0.6}Co_{0.2}Mn_{0.2}O₂ (NCM622) positive electrode, and a secondary battery composed of a lithium metal negative electrode coated with a PTVE film and a LiNi_{0.6}Co_{0.2}Mn_{0.2}O₂ (NCM622) positive electrode.
Figure 8 is a test result of a symmetrical cell using an ion conductive ceramic solid electrolyte LTAP (Li₁₊ₓTi₂₋ₓAlₓ(PO₄)₃) as an electrolyte and coating both lithium metals with PTNB, a symmetrical cell using an ion conductive ceramic solid electrolyte LTAP (Li₁₊ₓTi₂₋ₓAlₓ(PO₄)₃) as an electrolyte and not coating both lithium metals with PTNB.

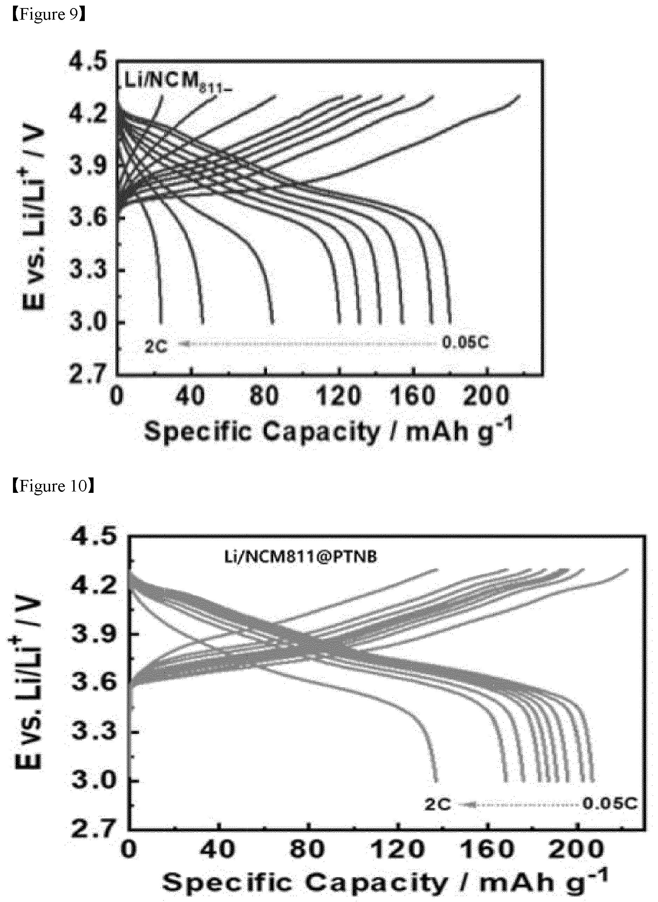

Figure 9 is a charge-discharge curve measured at a current density of 0.05C-2C for a secondary battery composed of a lithium metal negative electrode not coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃).
Figure 10 is a charge-discharge curve measured at a current density of 0.05C-2C for a secondary battery composed of a lithium metal negative electrode coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃).

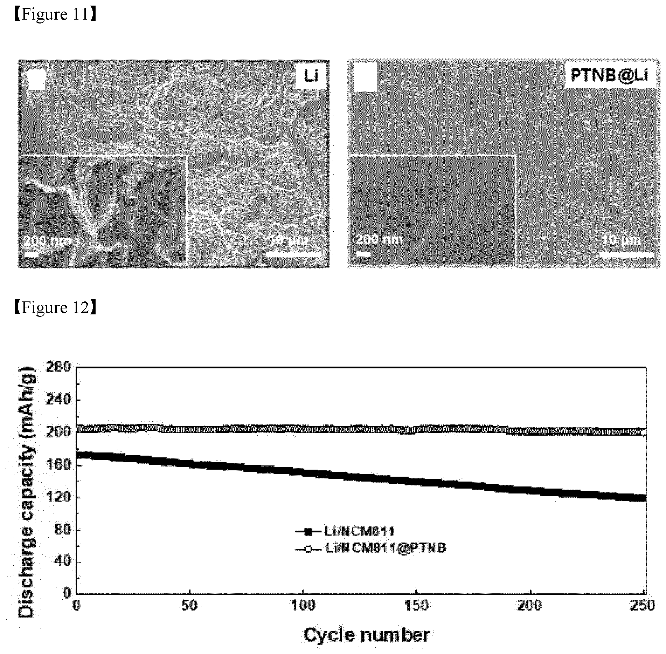

Figure 11 is an each SEM photograph of the lithium surface of a secondary battery composed of a lithium metal negative electrode not coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃) and a secondary battery composed of a lithium metal negative electrode coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃).
Figure 12 is a lifespan characteristic curve measured at a current density of 0.1C for a secondary battery composed of a lithium metal negative electrode not coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃) and a secondary battery composed of a lithium metal negative electrode coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃).

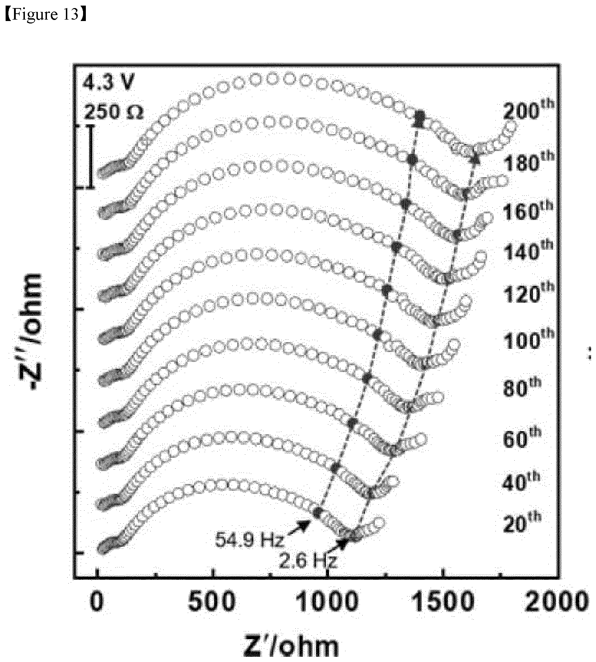

Figure 13 is a change of interfacial resistance according to cycles for a secondary battery composed of a lithium metal negative electrode not coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃).

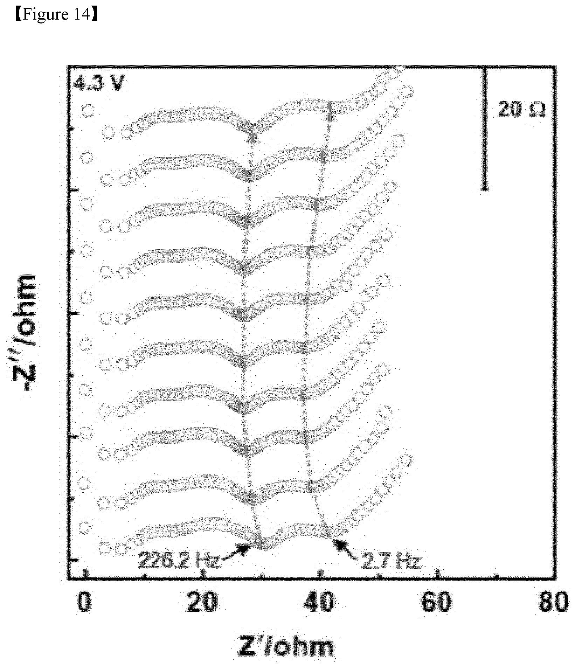

Figure 14 is a change of interfacial resistance according to cycles for a secondary battery composed of a lithium metal negative electrode coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃).

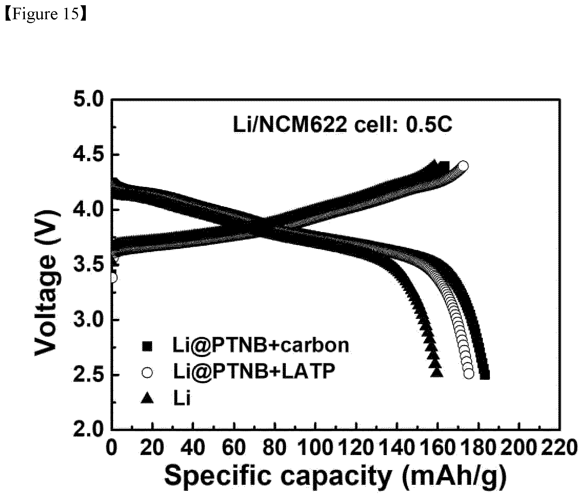

Figure 15 is a charge-discharge curve measured at a current density of 0.5C for a secondary battery composed of a lithium metal negative electrode not coated with a PTNB film, a LiNi_{0.6}Co_{0.2}Mn_{0.2}O₂ (NCM622) positive electrode, a commercially available liquid electrolyte, and a commercially available separator, for a secondary battery composed of a lithium metal negative electrode coated with a composite polymer film of 60 wt% of PTNB and 40 wt% of carbon, a LiNi_{0.6}Co_{0.2}Mn_{0.2}O₂ (NCM622) positive electrode, a commercially available liquid electrolyte, and a commercially available separator, and for a secondary battery composed of a lithium metal negative electrode coated with a composite polymer film of 60 wt% of PTNB and 40 wt% of LATP, a LiNi_{0.6}Co_{0.2}Mn_{0.2}O₂ (NCM622) positive electrode, a commercially available liquid electrolyte, and a commercially available separator.

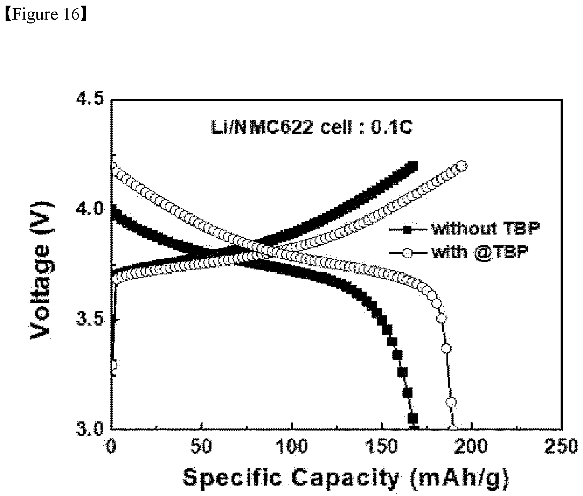

Figure 16 is a charge-discharge curve measured at a current density of 0.1C for a secondary battery composed of a lithium metal negative electrode coated with a TBP film, a LiNi_{0.6}Co_{0.2}Mn_{0.2}O₂ (NCM622) positive electrode, a commercially available liquid electrolyte (1M LiPF₆ in EC/DMC), and a commercially available separator (CELGARD), and for a secondary battery composed of a lithium metal negative electrode not coated with a TBP film, a LiNi_{0.6}Co_{0.2}Mn_{0.2}O₂ (NCM622) positive electrode, a commercially available liquid electrolyte (1M LiPF₆ in EC/DMC), and a commercially available separator (CELGARD).

### [Best Mode for Invention]

Hereinafter, embodiments of the present invention will be described in detail. The following embodiments are presented by way of illustration of the present invention. The present invention is not limited by the following embodiments. The invention is only defined by the claims set forth below.

Embodiments of the present invention are as follows.
1. A metal electrode having a protective film formed by coating the metal electrode with a polymer material having an oxygen atom containing free radicals in its molecular structure that undergoes oxidation-reduction reaction by ionic interaction during electrochemical reaction.
2. The metal electrode according to the first aspect embodiment, the polymer material is at least one selected from the group consisting of a nitroxide radical, a sulfonyloxy radical, and a phenoxyl radical.
3. The metal electrode according to the first aspect embodiment or the second aspect embodiment, the polymer material interacts with lithium ions at a voltage of 2.5 V or less to undergo an oxidation-reduction reaction.
4. The metal electrode according to the first aspect embodiment or the second aspect embodiment, the monomer of the polymer material has two oxygen atoms containing the free radicals.
5. The metal electrode according to the first aspect embodiment or the second aspect embodiment, the metal is lithium, sodium, aluminum, zinc, or magnesium.
6. The metal electrode according to the first aspect embodiment or the second aspect embodiment, wherein the protective film has a thickness of 10 micrometers to 200 micrometers.
7. The metal electrode according to aspect 6 embodiment, the protective film has a thickness of 20 micrometers to 100 micrometers.
8. The metal electrode according to the first aspect embodiment or the second aspect embodiment, the solvent for dissolving the polymer material in order to coat the polymer material on the metal electrode is a non-aqueous organic solvent or a non-aqueous organic solvent lithium salt is dissolved therein.
9. The metal electrode according to aspect 8 embodiment, the non-aqueous organic solvent is a carbonate-based solvent, ester-based solvent, ether-based solvent, ketone-based solvent, alcohol-based solvent, aprotic solvent, or a combination thereof.
10. The metal electrode according to aspect 8 embodiment, the lithium salt is LiClO₄, LiBF₄, LiPF₆, CF₃SO₂NLiSO₂CF₃ (LiTFSI), Li[N(SO₂F)₂ (LiFSI), Li[B(C₂O₄)₂ (LiBOB), LiAsF₆, lithium fluorosulfonyl-trifluoromethanesulfonylimide (LiFTFSI), or a combination thereof.
11. The metal electrode according to the first aspect embodiment or the second aspect embodiment, the protective film further comprises a carbon-based material, an ion conductive ceramic, or a carbon-based material and an ion conductive ceramic.
12. The metal electrode according to aspect 11 embodiment, the carbon-based material has electrical conductivity.
13. The metal electrode according to aspect 11 embodiment, the carbon-based material is graphite-based material, hard carbon-based material, soft carbon-based material, acetylene black, carbon nanotube, or a combination thereof.
14. The metal electrode according to aspect 11 embodiment, the ion conductive ceramic is a lithium oxide-based ceramic containing oxygen in its crystal structure such as Al₂O₃-based ion conductive ceramic, SiOz-based ion conductive ceramic, BaTiO₃-based ion conductive ceramic, or TiO₂-based ion conductive ceramics, a lithium sulfide-based ceramic containing sulfur in its crystal structure, a lithium phosphate-based ceramic containing phosphorous in its crystal structure, amorphous ion conductive material, sodium sulfide-based material, sodium oxide-based metal, or a combination thereof.
15. The metal electrode according to aspect 14 embodiment, the lithium oxide-based ceramic is Al₂O₃, LiI-Al₂O₃, SiO₂, LiI-SiO₂, BaTiO₃, LiI-BaTiO₃, TiO₂, LiI-TiO₂, β-Al₂O₃, (La,Li)TiO₃ ((La,Li)=La or Li) (LLTO), Li₅La₃Ta₂O₁₂, Li₆La₂CaTa₂O₁₂, Li₄SiO₄ Li₃BO_{2.5}N_{0.5}, Li₉SiAlO₈, Li₆La₂ANb₂O₁₂ (A=Ca or Sr), Li₂Nd₃TeSbO₁₂, Li_{1.3}Al_{0.3}Ti_{1.7}(PO₄)₃ (LTAP), Li₇La₃Zr₂O₁₂ (LLZO), Li₅La₃Ta₂O₁₂, or Li₉SiAlO₈.
16. The metal electrode according to aspect 14 embodiment, the lithium sulfide-based ceramic is Li₁₀GeP₂S₁₂, Li₇P₂S₁₁, Li_{3.25}Ge_{0.25}P_{0.75}S₄ (LGPS), Li₂SSi₂S₅, Li₂S-Ga₂S₃-GeS₂, Li₂S-Sb₂S₃-GeS₂, Li₂S-P₂S₅, Li₂S-P₂S₅-Li₄SiO₄, or Li_{3.75}-Ge_{0.25}-P_{0.75}S4 (Thio-LISICON).
17. The metal electrode according to aspect 14 embodiment, the lithium phosphate-based ceramic is LAGP(Li₁₊ₓAlₓGe₂₋ₓ(PO₄)₃)(0<x<2), LTAP(Li₁₊ₓTi₂₋ₓAₗₓ(PO₄)₃)(0<x<2), Li₁₊ₓTi₂₋ₓAlₓSi_{y}(PO₄)_{3-y}(0<x<2, 0<y<3), LiAlₓZr₂₋ₓ(PO₄)₃ (0<x<2), or LiTiₓZr₂₋ₓ(PO₄)₃ (0<x<2).
18. The metal electrode according to aspect 14 embodiment, the amorphous ion conductive material is phosphorous-based glass, oxide-based glass, or oxide-sulfide-based glass.
19. The metal electrode according to aspect 14 embodiment, the sodium sulfide-based material is NASICON or Na₃PS₄.
20. The metal electrode according to aspect 14 embodiment, the sodium oxide-based material is Na₃Zr₂Si₂PO₁₂.
21. The metal electrode according to aspect 11 embodiment, the content of the polymer material having an oxygen atom containing free radicals in its molecular structure that undergoes oxidation-reduction reaction by ionic interaction during electrochemical reaction to the protective film is 20% by weight to 100% by weight.
22. A secondary battery comprising the metal electrode of any one of aspect 1 to 21 embodiments.

In an embodiment of the present invention, a lithium metal negative electrode protective film is formed by coating an ion conductive organic material on the lithium metal negative electrode to improve the electrochemical properties of the lithium metal secondary battery.

Figure 1 is a schematic diagram of an embodiment of the present invention, the left side shows the growth of lithium dendrites when a battery is constructed using a conventional lithium metal negative electrode, and the right side shows that the lithium metal is not in direct contact with the electrolyte and the dendrites do not grow by coating the polymer film of the present invention on the surface of the lithium metal negative electrode. The thickness of the polymer film of the present invention may be 5 micrometers to 200 micrometers. The thickness of the polymer film of the present invention is preferably 20 micrometers to 100 micrometers.

In order to coat the polymer of the present invention on a lithium metal surface, the polymer of the present invention may be dissolved in a solvent. The solvent may be a non-aqueous organic solvent or a non-aqueous organic solvent lithium salt is dissolved therein, but is not limited thereto. The solvent used for dissolving the polymer of the present invention may include any solvent used as a liquid electrolyte commonly used in the art. The non-aqueous organic solvent may be a carbonate-based solvent, ester-based solvent, ether-based solvent, ketone-based solvent, alcohol-based solvent, aprotic solvent, or a combination thereof. The solvent may be 1,2-dimethoxyethane (DME), ethylene carbonate (EC), dimethyl carbonate (DMC), ethyl methyl carbonate (EMC), diethyl carbonate (DEC), propylene carbonate (PC), dimethylformamide (DMF), N-methyl-2-pyrrolidone (NMP), N,N-dimethylacetamide (DMAc), acetone, ethanol, methanol, butanol, distilled water, tetrahydrofuran (THF), hexanol, chloroform , a derivative thereof, or a combination thereof.

The lithium salt dissolved in the non-aqueous organic solvent may be LiClO₄, LiBF₄, LiPF₆, CF₃SO₂NLiSO₂CF₃ (LiTFSI), Li[N(SO₂F)₂ (LiFSI), Li[B(C₂O₄)₂] (LiBOB), LiAsF₆, lithium fluorosulfonyl-trifluoromethanesulfonylimide (LiFTFSI), or a combination thereof.

Figure 2 is representative functional groups of a polymer material to be coated on a metal electrode, a nitroxide radical, a phenoxyl radical, and a sulfonyloxy radical comprising an oxygen atom containing free radicals. These materials interact with lithium ions at a voltage of 2.5V or less to undergo oxidation-reduction reactions.

The polymer film of the present invention may be a composite of the polymer of the present invention and a carbon-based material. The content of the polymer of the present invention may be 60 wt% to 99 wt%, preferably 70 wt% to 90 wt%. The content of the carbon-based material may be 40 wt% to 1 wt%, preferably 30 wt% to 10 wt%. The polymer film of the present invention may be in a composite of the polymer of the present invention and an ion conductive ceramic. The content of the polymer of the present invention may be 60 wt% to 99 wt%, preferably 70 wt% to 90 wt%. The content of the ion conductive ceramic may be 40 wt% to 1 wt%, preferably 30 wt% to 10 wt%. The polymer film of the present invention may be a composite of a polymer, a carbon-based material, and an ion conductive ceramic. The content of the polymer of the present invention may be 60 wt% to 99 wt%, preferably 70 wt% to 90 wt%. The content of the carbon-based material may be 20 wt% to 0.5 wt%, preferably 20 wt% to 5 wt%. The content of the ion conductive ceramic may be 20 wt% to 0.5 wt%, preferably 10 wt% to 5 wt%.

Examples of the carbon-based material include graphite-based material, hard carbon-based material, soft carbon-based material, acetylene black, and carbon nanotubes. Any kind of carbon material having electrical conductivity may be the carbon-based material. The ion conductive ceramics include oxide-based ceramics, phosphate-based ceramics, and sulfide-based ceramics. The ion conductive ceramic may be a lithium oxide-based ceramic containing oxygen in its crystal structure such as Al₂O₃-based ceramic, SiOz-based ceramic, BaTiO₃-based ceramic, TiOz-based ceramic, β-Al₂O₃, (La,Li)TiO₃((La,Li)=La or Li) (LLTO), Li₅La₃Ta₂O₁₂, Li₆La₂CaTa₂O₁₂, Li₄SiO4, Li₃BO_{2.5}N_{0.5}, Li₉SiAlO₈, Li₆La₂ANb₂O₁₂ (A=Ca or Sr), Li₂Nd₃TeSbO₁₂, Li_{1.3}Al_{0.3}Ti_{1.7}(PO₄)₃ (LTAP), Li₇La₃Zr₂O₁₂ (LLZO), Li₄La₃Ta₂O₁₂, Li₉SiAlO₈, a lithium sulfide-based ceramic containing sulfur in its crystal structure such as Li₁₀GeP₂S₁₂, Li₇P₂S₁₁, Li_{3.25}Ge_{0.25}P_{0.75}S₄ (LGPS), Li₂SSi₂S₅, Li₂S-Ga₂S₃-GeS₂, Li₂S-Sb₂S₃-GeS₂, Li₂S-P₂S₅, Li₂S-P₂S₅-Li₄SiO₄, Li_{3.25}-Ge_{0.25}-P_{0.75}S₄ (Thio-LISICON), a lithium phosphate-based ceramic containing phosphorus in its crystal structure such as LAGP (Li₁₊ₓAlₓGe₂₋ₓ(PO₄)₃) (0<x<2, preferably 0<x<1), LTAP(Li₁₊ₓTi₂₋ₓAlₓ(PO₄)₃)(0<x<2, preferably 0<x<1), Li₁₊ₓTi₂₋ₓAlₓSi_{y}(PO₄)_{3-y}(0<x<2, 0<y<3, preferably 0<x<1, 0<y<1), LiAlₓZr₂₋ₓ(PO₄)₃ (0<x<2, preferably 0<x<1), LiTiₓZr₂₋ₓ(PO₄)₃ (0<x<2, preferably 0<x<1), an amorphous ion conductive material such as phosphorous-based glass, oxide-based glass, oxide-sulfide-based glass, a sodium sulfide-based material such as NASICON, Na₃PS₄, or a sodium oxide-based material such as Na₃Zr₂Si₂PO₁₂, or a combination thereof.

The Al₂O₃-based ceramic may be Al₂O₃ or LiI-Al₂O₃.

The SiO₂-based ceramic may be SiOz or LiI-SiOz.

The BaTiO₃-based ceramic may be BaTiO₃ or LiI-BaTiO₃.

The TiOz-based ceramic may be TiOz or LiI-TiOz.

Figures 3 and 4 are results of a stripping-plating test to investigate the occurrence of dendrite growth on the lithium metal surface. Two symmetrical cells composed of two lithium metal electrodes, a liquid electrolyte (1M LiPF₆ in EC/DMC), and a commercially available separator (CELGARD) are prepared. One of the symmetric cells has PTNB (poly[2,3-bis(2,2,6,6-tetramethylpiperidine-N-oxycarbonyl)-norbornene]) polymer protective film on both of the lithium metal surfaces, and the other one of the symmetric cells does not have PTNB polymer protective film on both of the lithium metal surfaces. In the symmetric cell without the PTNB polymer protective film, the voltage range is not constant and is irregular as shown in Figure 3. However, as shown in Figure 4, in the symmetrical cell coated with the PTNB polymer protective film, the voltage range is stably maintained for a long time.

Figure 5 is a charge-discharge curve measured at a current density of 0.1C for a secondary battery composed of a lithium metal negative electrode not coated with a PSS film and LiNi_{0.8}Co_{0.1}Mn_{0.1}O₂ (NCM811) positive electrode, and a secondary battery composed of a lithium metal negative electrode coated with a PSS film and LiNi_{0.8}Co_{0.1}Mn_{0.1}O₂ (NCM811) positive electrode. A secondary battery using a negative electrode coated with a PSS film on the lithium metal has a higher capacity than a secondary battery using a negative electrode not coated with a PSS film on the lithium metal.

Figure 6 is a lifespan graph for a secondary battery composed of a lithium metal negative electrode not coated with a PSS film and a LiNi_{0.8}Co_{0.1}Mn_{0.1}O₂ (NCM811) positive electrode, and a secondary battery composed of a lithium metal negative electrode coated with a PSS film and a LiNi_{0.8}Co_{0.1}Mn_{0.1}O₂ (NCM811) positive electrode. A secondary battery using a negative electrode coated with a PSS film on the lithium metal has a higher capacity retention rate as the cycle increases compared to a secondary battery using a negative electrode not coated with a PSS film on the lithium metal.

Figure 7 is a charge-discharge curve measured at a current density of 0.1C for a secondary battery composed of a lithium metal negative electrode not coated with a PTVE film and a LiNi_{0.6}Co_{0.2}Mn_{0.2}O₂ (NCM622) positive electrode, and a secondary battery composed of a lithium metal negative electrode coated with a PTVE film and a LiNi_{0.6}Co_{0.2}Mn_{0.2}O₂ (NCM622) positive electrode. A secondary battery using a negative electrode coated with a PTVE film on the lithium metal has a higher capacity than a secondary battery using a negative electrode not coated with a PTVE film on the lithium metal.

Figure 8 is a result of a stripping-plating test with a Li/Li symmetric cell to investigate the occurrence of dendrite growth on the lithium metal surface. As the electrolyte, ion conductive ceramic solid electrolyte LTAP (Li₁₊ₓTi₂₋ₓAlₓ(PO₄)₃) was used. One of the symmetric cells has PTNB coated on both lithium metals and the other has no PTNB coated on both lithium metals. A symmetrical cell coated with PTNB on lithium metal (black graph) operates stably for a long time without significant changes in voltage compared to a symmetric cell not coated with PTNB on lithium metal (gray graph).

Figure 9 is a charge-discharge curve measured at a current density of 0.05C-2C for a secondary battery composed of a lithium metal negative electrode not coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃). The secondary battery of figure 9 has a low capacity, and the capacity rapidly decreases as the current density increases.

Figure 10 is a charge-discharge curve measured at a current density of 0.05C-2C for a secondary battery composed of a lithium metal negative electrode coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃). The secondary battery of figure 10 has a high capacity, and the capacity does not decrease rapidly even when the current density increases.

Figure 11 is an each SEM photograph of the lithium surface of a secondary battery composed of a lithium metal negative electrode not coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃) and a secondary battery composed of a lithium metal negative electrode coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃). The surface of lithium not coated with PTNB film has many wrinkles, but the surface of lithium coated with PTNB film is flat.

Figure 12 is a lifespan characteristic curve measured at a current density of 0.1C for a secondary battery composed of a lithium metal negative electrode not coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃) and a secondary battery composed of a lithium metal negative electrode coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃). A secondary battery using a negative electrode not coated with a PTNB film on the lithium metal rapidly decreases in capacity as the cycle increases. However, the capacity is maintained with little decrease even when the cycle number increases in a secondary battery using a negative electrode coated with a PTNB film on the lithium metal.

Figure 13 is a change of interfacial resistance according to cycles for a secondary battery composed of a lithium metal negative electrode not coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃). A secondary battery using a negative electrode not coated with PTNB film has high interfacial resistance.

Figure 14 is a change of interfacial resistance according to cycles for a secondary battery composed of a lithium metal negative electrode coated with a PTNB film, a LiNi_{0.8}Co_{0.1}Mn_{0.1}O₂ (NCM811) positive electrode, and an ion conductive ceramic solid electrolyte LTAP (Li₁₊ₓTi₂₋ₓAlₓ(PO₄)₃). A secondary battery using a negative electrode coated with PTNB film has low interfacial resistance.

Figure 15 is a charge-discharge curve measured at a current density of 0.5C for a secondary battery composed of a lithium metal negative electrode not coated with the polymer film of the present invention, a LiNi_{0.6}Co_{0.2}Mn_{0.2}O₂ (NCM622) positive electrode, a commercially available liquid electrolyte, and a commercially available separator, for a secondary battery composed of a lithium metal negative electrode coated with a composite polymer film of 60 wt% of PTNB and 40 wt% of carbon, a LiNi_{0.6}Co_{0.2}Mn_{0.2}O₂ (NCM622) positive electrode, a commercially available liquid electrolyte, and a commercially available separator, and for a secondary battery composed of a lithium metal negative electrode coated with a composite polymer film of 60 wt% of PTNB and 40 wt% of LATP, a LiNi_{0.6}Co_{0.2}Mn_{0.2}O₂ (NCM622) positive electrode, a commercially available liquid electrolyte, and a commercially available separator. A secondary battery using a negative electrode not coated with the polymer film of the present invention has a low capacity. However, a secondary battery using a negative electrode coated with the composite polymer film of the present invention has a high capacity.

Figure 16 is a charge-discharge curve measured at a current density of 0.1C for a secondary battery composed of a lithium metal negative electrode coated with a TBP film, a LiNi_{0.6}Co_{0.2}Mn_{0.2}O₂ (NCM622) positive electrode, a commercially available liquid electrolyte (1M LiPF₆ in EC/DMC), and a commercially available separator (CELGARD), and for a secondary battery composed of a lithium metal negative electrode not coated with a TBP film, a LiNi_{0.6}Co_{0.2}Mn_{0.2}O₂ (NCM622) positive electrode, a commercially available liquid electrolyte (1M LiPF₆ in EC/DMC), and a commercially available separator (CELGARD). The secondary battery of the present invention using a TBP-coated negative electrode exhibits high capacity. However, the prior art secondary battery using a negative electrode not coated with TBP exhibits low capacity.

The content of the polymer having a functional group comprising an oxygen atom containing free radicals of the present invention in the protective film may be from 20% to 100% by weight, from 60% to 100% by weight, and from 80% to 100% by weight. The content of the polymer having a functional group comprising an oxygen atom containing free radicals of the present invention in the protective film may be from 20% to 80% by weight, and from 30% to 70% by weight.

### Example

In the following examples, PTNB, PSS, PTVE, and TBP were used as the polymers of protective layer of the lithium metal electrode. Each of the above polymers comprises a functional group having free radicals at an oxygen atom. Each of the above polymers was dissolved in a 1,2-dimethoxyethane (DME) solvent, coated on a lithium metal surface, and dried to prepare a protective layer for a lithium metal electrode.

### Example 1

Li/Li symmetric cells were prepared for stripping-plating tests to investigate the growth of dendrites. A PTNB polymer is dissolved in 1,2-dimethoxyethane (DME) solvent, coated on a lithium metal electrode, and dried to form a PTNB polymer protective layer on a lithium metal electrode. A symmetrical cell of the present invention was constructed with the above lithium metal electrode, a commercially available liquid electrolyte (1M LiPF₆ in EC/DMC), and a commercially available separator (CELGARD). A symmetrical cell of the prior art was constructed with a lithium metal electrode not coated with a polymer protective layer on a lithium metal, a liquid electrolyte (1M LiPF₆ in EC/DMC), and a commercially available separator (CELGARD). As shown in figures 3 and 4, the symmetric cell using the PTNB-coated electrode operated stably for a long time without significant change in voltage compared to the symmetric cell not using the PTNB-coated electrode. This is because the growth of lithium dendrites is suppressed.

### Example 2

A secondary battery of the present invention was constructed with a negative electrode coated with PSS on a lithium metal surface, a LiNi_{0.8}Co_{0.1}Mn_{0.1}O₂ (NCM811) positive electrode, a commercially available liquid electrolyte (1M LiPF₆ in EC/DMC), and a commercially available separator (CELGARD). The NCM811 positive electrode was composed of 92% by weight of NCM active material, 4% by weight of PVdF binder, and 4% by weight of SUPER-P^{™} carbon black from TIMCAL. A secondary battery of the prior art was constructed with a negative electrode not coated with PSS on a lithium metal surface, a LiNi_{0.8}Co_{0.1}Mn_{0.1}O₂ (NCM811) positive electrode, a commercially available liquid electrolyte (1M LiPF₆ in EC/DMC), and a commercially available separator (CELGARD). The NCM811 positive electrode used in the prior art secondary battery was also composed of 92% by weight of NCM active material, 4% by weight of PVdF binder, and 4% by weight of SUPER-P^{™} carbon black from TIMCAL. As shown in figure 5, the secondary battery using the PSS-coated negative electrode exhibited a capacity of 210 mAh/g at a current density of 0.1C, but the secondary battery using the negative electrode not coated with PSS had a low capacity of 172.9 mAh/g. As shown in figure 6, the secondary battery using the PSS-coated negative electrode exhibited a capacity retention rate of 94% at 210 cycles, but the secondary battery using the negative electrode not coated with PSS exhibited a capacity retention rate of 62% at 210 cycles.

### Example 3

A secondary battery of the present invention was constructed with a negative electrode coated with PTVE on a lithium metal surface, a LiNi_{0.6}Co_{0.2}Mn_{0.2}O₂ (NCM622) positive electrode, a commercially available liquid electrolyte (1M LiPF₆ in EC/DMC), and a commercially available separator (CELGARD). The NCM622 positive electrode was composed of 92% by weight of NCM active material, 4% by weight of PVdF binder, and 4% by weight of SUPER-P^{™} carbon black from TIMCAL. A secondary battery of the prior art was constructed with a negative electrode not coated with PTVE on a lithium metal surface, a LiNi_{0.6}Co_{0.2}Mn_{0.2}O₂ (NCM622) positive electrode, a commercially available liquid electrolyte (1M LiPF₆ in EC/DMC), and a commercially available separator (CELGARD). The NCM622 positive electrode used in the prior art secondary battery was also composed of 92% by weight of NCM active material, 4% by weight of PVdF binder, and 4% by weight of SUPER-P^{™} carbon black from TIMCAL. As shown in figure 7, the secondary battery using the PTVE-coated negative electrode exhibited a high capacity of 184 mAh/g at a current density of 0.1C, but the secondary battery using the negative electrode not coated with PTVE had a low capacity of 170 mAh/g.

### Example 4

Li/Li symmetric cells were prepared for stripping-plating tests to investigate the growth of dendrites. A PTNB polymer is dissolved in 1,2-dimethoxyethane (DME) solvent, coated on a lithium metal electrode, and dried to form a PTNB polymer protective layer on a lithium metal electrode. A symmetrical cell of the present invention was constructed with the above lithium metal electrode and an ion conductive ceramic solid electrolyte LTAP (Li₁₊ₓTi₂₋ₓAlₓ(PO₄)₃). A symmetrical cell of the prior art was constructed with a lithium metal electrode not coated with PTNB polymer on lithium metal and an ion conductive ceramic solid electrolyte LTAP. As shown in figure 8, a symmetrical cell coated with PTNB on lithium metal (black graph) operates stably for a long time without significant changes in voltage compared to a symmetric cell not coated with PTNB on lithium metal (gray graph). This is because the growth of lithium dendrites was suppressed.

### Example 5

A secondary battery of the present invention was constructed with a negative electrode coated with PTNB on a lithium metal surface, a LiNi_{0.8}Co_{0.1}Mn_{0.1}O₂ (NCM811) positive electrode, and LTAP (Li₁₊ₓTᵢ₂₋ₓAlₓ(PO₄)₃) ion conductive ceramic solid electrolyte. The NCM811 positive electrode was composed of 92% by weight of NCM active material, 4% by weight of PVdF binder, and 4% by weight of SUPER-P^{™} carbon black from TIMCAL. A secondary battery of the prior art was constructed with a negative electrode not coated with PTNB on a lithium metal surface, a LiNi_{0.8}Co_{0.1}Mn_{0.1}O₂ (NCM811) positive electrode, and LTAP (Li₁₊ₓTᵢ₂₋ₓAlₓ(PO₄)₃) ion conductive ceramic solid electrolyte. The NCM811 positive electrode used in the prior art secondary battery was also composed of 92% by weight of NCM active material, 4% by weight of PVdF binder, and 4% by weight of SUPER-P^{™} carbon black from TIMCAL. As shown in figure 9, the secondary battery of the prior art using a negative electrode not coated with PTNB exhibited a low discharge capacity of 172.1 mAh/g at a current density of 0.1C. However, as shown in figure 10, the all-solid-state secondary battery of the present invention using a negative electrode coated with PTNB exhibited a high discharge capacity of 204.7 mAh/g at a current density of 0.1C. In addition, as shown in figures 9 and 10, the prior art all-solid-state secondary battery using a negative electrode not coated with PTNB rapidly decreased in capacity as the current density increased. However, the all-solid-state secondary battery of the present invention using a negative electrode coated with PTNB maintained high capacity even when the current density increased.

### Example 6

A secondary battery of the present invention was constructed with a negative electrode coated with PTNB on a lithium metal surface, a LiNi_{0.8}Co_{0.1}Mn_{0.1}O₂ (NCM811) positive electrode, and LTAP (Li₁₊ₓTᵢ₂₋ₓAlₓ(PO₄)₃) ion conductive ceramic solid electrolyte. The NCM811 positive electrode was composed of 92% by weight of NCM active material, 4% by weight of PVdF binder, and 4% by weight of SUPER-P^{™} carbon black from TIMCAL. A secondary battery of the prior art was constructed with a negative electrode not coated with PTNB on a lithium metal surface, a LiNi_{0.8}Co_{0.1}Mn_{0.1}O₂ (NCM811) positive electrode, and LTAP (Li₁₊ₓTᵢ₂₋ₓAlₓ(PO₄)₃) ion conductive ceramic solid electrolyte. The NCM811 positive electrode used in the prior art secondary battery was also composed of 92% by weight of NCM active material, 4% by weight of PVdF binder, and 4% by weight of SUPER-P^{™} carbon black from TIMCAL. Figure 11 is a SEM photograph of the surface of the lithium metal electrode after 200 cycles of the secondary batteries of the present invention and the prior art of example 6. In the prior art secondary battery using a negative electrode not coated with PTNB, dendrites were formed and wrinkled (left), but the secondary battery of the present invention using a negative electrode coated with PTNB had a flat surface (right).

### Example 7

A lifespan test was performed with the secondary batteries of the present invention and the prior art of example 5. As shown in figure 12, the secondary battery of the prior art using a negative electrode not coated with PTNB maintained a low capacity of 69% at 250 cycles, but the secondary battery of the present invention using a negative electrode coated with PTNB maintained a high capacity of 98% at 250 cycles. This is because the PTNB protective film effectively inhibited the growth of dendrites of the lithium electrode.

### Example 8

An interfacial resistance was measured with the secondary batteries of the present invention and the prior art of example 5. As shown in figure 13, the secondary battery of the prior art using a negative electrode not coated with PTNB had an interfacial resistance of 1,000 ohms or more in 20 to 200 cycles. However, as shown in figure 14, the secondary battery of the present invention using a negative electrode coated with PTNB had an interfacial resistance of 40 ohms or less in 20 to 200 cycles. This is because the PTNB polymer layer lowered the interfacial resistance between the electrode and the solid electrolyte.

### Example 9

A secondary battery of the prior art was constructed with a lithium metal negative electrode, LiNi_{0.6}Co_{0.2}Mn_{0.2}O₂ (NCM622) positive electrode, a commercially available liquid electrolyte (1M LiPF₆ in EC/DMC), and a commercially available separator (CELGARD). A secondary battery of the present invention was prepared by coating the lithium metal negative electrode of the secondary battery of the above prior art with a composite polymer of 60% by weight of PTNB and 40% by weight of carbon. Another secondary battery of the present invention was prepared by coating the lithium metal negative electrode of the secondary battery of the above prior art with a composite polymer of 60% by weight of PTNB and 40% by weight of LTAP. These three secondary batteries were subjected to a charge-discharge test at a current density of 0.5C. The results are shown in figure 15. The secondary battery of the prior art exhibited a low capacity of 159 mAh/g. The secondary battery of the present invention using a lithium metal negative electrode with a composite polymer of 60 wt% of PTNB and 40 wt% of carbon exhibited a high capacity of 183 mAh/g. The other secondary battery of the present invention using a lithium metal negative electrode coated with a composite polymer of 60 wt% of PTNB and 40 wt% of LTAP exhibited a high capacity of 170 mAh/g.

### Example 10

A secondary battery of the present invention was constructed with a negative electrode coated with 2,4,6-tri-t-butylphenoxyl (TBP) on a lithium metal surface, a LiNi_{0.6}Co_{0.2}Mn_{0.2}O₂ (NCM622) positive electrode, a commercially available liquid electrolyte (1M LiPF₆ in EC/DMC), and a commercially available separator (CELGARD). The NCM622 positive electrode was composed of 92% by weight of NCM active material, 4% by weight of PVdF binder, and 4% by weight of SUPER-P^{™} carbon black from TIMCAL. A secondary battery of the prior art was constructed with a negative electrode not coated with TBP on a lithium metal surface, a LiNi_{0.6}Co_{0.2}Mn_{0.2}O₂ (NCM622) positive electrode, a commercially available liquid electrolyte (1M LiPF₆ in EC/DMC), and a commercially available separator (CELGARD). The NCM622 positive electrode used in the prior art secondary battery was also composed of 92% by weight of NCM active material, 4% by weight of PVdF binder, and 4% by weight of SUPER-P^{™} carbon black from TIMCAL. As shown in figure 16, the secondary battery using the TBP-coated negative electrode exhibited a high capacity of 188 mAh/g at a current density of 0.1C, but the secondary battery using the negative electrode not coated with TBP exhibited a low capacity of 168 mAh/g.

The present invention is not limited to the above embodiments and may be implemented in various other forms. Those of ordinary skill in the art to which the present invention pertains will understand that the present invention can be implemented in other specific forms without changing the technical spirit or essential features of the present invention. Therefore, it should be understood that the embodiments described above are illustrative in all respects and not restrictive.

## Claims

1. A metal electrode having a protective film formed by coating the metal electrode with a polymer material having an oxygen atom containing free radicals in its molecular structure that undergoes oxidation-reduction reaction by ionic interaction during electrochemical reaction.

2. The metal electrode according to claim 1, the polymer material is at least one selected from the group consisting of a nitroxide radical, a sulfonyloxy radical, and a phenoxyl radical.

3. The metal electrode according to claim 1 or 2, the polymer material interacts with lithium ions at a voltage of 2.5 V or less to undergo an oxidation-reduction reaction.

4. The metal electrode according to claim 1 or 2, the monomer of the polymer material has two oxygen atoms containing the free radicals.

5. The metal electrode according to claim 1 or 2, the metal is lithium, sodium, aluminum, zinc, or magnesium.

6. The metal electrode according to claim 1 or 2, the protective film has a thickness of 10 micrometers to 200 micrometers.

7. The metal electrode according to claim 6, the protective film has a thickness of 20 micrometers to 100 micrometers.

8. The metal electrode according to claim 1 or 2, the solvent for dissolving the polymer material in order to coat the polymer material on the metal electrode is a non-aqueous organic solvent or a non-aqueous organic solvent lithium salt is dissolved therein.

9. The metal electrode according to claim 8, the non-aqueous organic solvent is a carbonate-based solvent, ester-based solvent, ether-based solvent, ketone-based solvent, alcohol-based solvent, aprotic solvent, or a combination thereof.

10. The metal electrode according to claim 8, the lithium salt is LiClO₄, LiBF₄, LiPF₆, CF₃SO₂NLiSO₂CF₃ (LiTFSI), Li[N(SO₂F)₂ (LiFSI), Li[B(C₂O₄)₂ (LiBOB), LiAsF₆, lithium fluorosulfonyl-trifluoromethanesulfonylimide (LiFTFSI), or a combination thereof.

11. The metal electrode according to claim 1 or 2, the protective film further comprises a carbon-based material, an ion conductive ceramic, or a carbon-based material and an ion conductive ceramic.

12. The metal electrode according to claim 11, the carbon-based material has electrical conductivity.

13. The metal electrode according to claim 11, the carbon-based material is graphite-based material, hard carbon-based material, soft carbon-based material, acetylene black, carbon nanotube, or a combination thereof.

14. The metal electrode according to claim 11, the ion conductive ceramic is a lithium oxide-based ceramic containing oxygen in its crystal structure, a lithium sulfide-based ceramic containing sulfur in its crystal structure, a lithium phosphate-based ceramic containing phosphorous in its crystal structure, amorphous ion conductive material, sodium sulfide-based material, sodium oxide-based metal, or a combination thereof.

15. The metal electrode according to claim 14, the lithium oxide-based ceramic is Al₂O₃, LiI-Al₂O₃, SiO₂, LiI-SiO₂, BaTiO₃, LiI-BaTiO₃, TiO₂, LiI-TiO₂, β-Al₂O₃, (La,Li)TiO₃ ((La,Li)=La or Li) (LLTO), Li₅La₃Ta₂O₁₂, Li₆La₂CaTa₂O₁₂, Li₄SiO₄ Li₃BO_{2.5}N_{0.5}, Li₉SiAlO₈, Li₆La₂ANb₂O₁₂ (A=Ca or Sr), Li₂Nd₃TeSbO₁₂, Li_{1.3}Al_{0.3}Ti_{1.7}(PO₄)₃ (LTAP), Li₇La₃Zr₂O₁₂ (LLZO), Li₅La₃Ta₂O₁₂, or Li₉SiAlO₈.

16. The metal electrode according to claim 14, the lithium sulfide-based ceramic is Li₁₀GeP₂S₁₂, Li₇P₂S₁₁, Li_{3.25}Ge_{0.25}P_{0.75}S₄ (LGPS), Li₂SSi₂S₅, Li₂S-Ga₂S₃-GeS₂, Li₂S-Sb₂S₃-GeS₂, Li₂S-P₂S₅, Li₂S-P₂S₅-Li₄SiO₄, or Li_{3.75}-Ge_{0.25}-P_{0.75}S4 (Thio-LISICON).

17. The metal electrode according to claim 14, the lithium phosphate-based ceramic is LAGP(Li₁₊ₓAlₓGe₂₋ₓ(PO₄)₃)(0<x<2), LTAP(Li₁₊ₓTi₂₋ₓAlₓ(PO₄)₃)(0<x<2), Li₁₊ₓTi₂₋ₓAlₓSi_{y}(PO₄)_{3-y}(0<x<2, 0<y<3), LiAlₓZr₂₋ₓ(PO₄)₃ (0<x<2), or LiTiₓZr₂₋ₓ(PO₄)₃ (0<x<2).

18. The metal electrode according to claim 14, the amorphous ion conductive material is phosphorous-based glass, oxide-based glass, or oxide-sulfide-based glass.

19. The metal electrode according to claim 14, the sodium sulfide-based material is NASICON or Na₃PS₄.

20. The metal electrode according to claim 14, the sodium oxide-based material is Na₃Zr₂Si₂PO₁₂.

21. The metal electrode according to claim 11, the content of the polymer material having an oxygen atom containing free radicals in its molecular structure that undergoes oxidation-reduction reaction by ionic interaction during electrochemical reaction to the protective film is 20% by weight to 100% by weight.

22. A secondary battery comprising the metal electrode of any one of claims 1 to 21.
